# EUROPEAN PATENT APPLICATION

(11) **EP 4 723 304 A1**
(43) Date of publication of application: **08.04.2026**
(21) Application number: 25196921.8
(22) Date of filing: 20.08.2025
(51) Int. Cl.: H01M 10/647, H01M 10/6554, H01M 50/209, H01M 50/242, H01M 50/474, H01M 50/477

(54) **POWER STORAGE DEVICE**

(30) Priority: 02.10.2024 JP 2024173179
(71) Applicant: TOYOTA JIDOSHA KABUSHIKI KAISHA, Toyota-shi, Aichi-ken 471-8571 (JP)
(72) Inventor: NISHIKI, Nobuyasu, Toyota-shi, Aichi-ken 471-8571 (JP)
(74) Representative: TBK

(57) **Abstract**

A power storage device includes: a lower case having a bottom wall portion (23); a cooler (30) disposed below the bottom wall portion (23); and a cover member (50) to cover the cooler (30) from below. The bottom wall portion (23) includes a first protrusion (26C) protruding downward. The cover member (50) includes a second protrusion (52C) that faces the first protrusion (26C) in an upward-downward direction and protrudes upward. The first protrusion (26C) protrudes more downward than a lower surface of the cooler (30).

## Description

### CROSS REFERENCE TO RELATED APPLICATIONS

This nonprovisional application is based on Japanese Patent Application No. 2024-173179 filed on October 2, 2024 with the Japan Patent Office, the entire contents of which are hereby incorporated by reference.

### BACKGROUND

### Field

The present disclosure relates to a power storage device.

### Description of the Background Art

As a conventional power storage device, Japanese Patent Laying-Open No. 2023-046671 discloses a structure in which a power storage stack disposed inside a lower case is cooled by using a cooler disposed below the lower case. The lower case is provided with a plurality of protrusions protruding downward and spaced apart from each other in a front-rear direction, and a protection panel for protecting the cooler is fixed to the plurality of protrusions.

### SUMMARY

In the configuration disclosed in Japanese Patent Laying-Open No. 2023-046671, for example, when an upward impact is applied from below due to road surface interference or the like to a portion of the protection panel located between protrusions adjacent to each other, this portion may deform so as to warp upward. Such a situation causes a concern that the deformed protection panel (a cover member) may come into contact with the cooler, so that an external force may be applied to the cooler.

The present disclosure has been made in view of the above-described problems, and an object thereof is to provide a power storage device in which, when an external force directed upward is applied from below, the external force can be suppressed from being applied to a cooler.

A power storage device according to the present disclosure includes: a lower case having a bottom wall portion; a cooler disposed below the bottom wall portion; and a cover member to cover the cooler from below. The bottom wall portion includes a first protrusion protruding downward. The cover member includes a second protrusion that faces the first protrusion in an upward-downward direction and protrudes upward. The first protrusion protrudes more downward than a lower surface of the cooler.

According to the above-described configuration, when an upward external force is applied to the cover member due to road surface interference or the like, the second protrusion bumps into the first protrusion, to thereby suppress deformation of the cover member. At this time, since the first protrusion protrudes more downward than the lower surface of the cooler, it is possible to suppress the cover member from bumping into the cooler, so that it is possible to suppress an external force from being applied to the cooler.

In the power storage device according to the present disclosure, the cooler may have a hole penetrating therethrough in the upward-downward direction. The first protrusion may be disposed inside the hole.

According to the above-described configuration, the first protrusion can be efficiently provided in a limited space.

The power storage device according to the present disclosure further includes: an electric device; and a bracket to fix the electric device to the bottom wall portion. The electric device may be fixed to the bracket at a first fixing position and a second fixing position that are spaced apart from each other in a front-rear direction orthogonal to the upward-downward direction. The electric device may have a portion spaced apart from the bracket between the first fixing position and the second fixing position.

According to the above-described configuration, since the electric device is spaced apart from the bracket between the first fixing position and the second fixing position, it is possible to suppress the bottom portion deformed by road surface interference or the like from bumping into the electric device, so that it is possible to suppress an impact from being applied to the electric device.

In the power storage device according to the present disclosure, a heat conduction member may be disposed between at least a part of a bottom surface of the electric device and the bottom wall portion.

According to the above-described configuration, the electric device and the cooler are in thermal contact with each other with the bottom portion and the heat conduction member being interposed therebetween, so that the electric device can be cooled.

The power storage device according to the present disclosure may include a first reinforcing member and a second reinforcing member that are spaced apart from each other in a front-rear direction orthogonal to the upward-downward direction and fixed to a lower surface of the bottom wall portion. The cover member may be fixed to the first reinforcing member and the second reinforcing member. The first protrusion and the second protrusion may be disposed between the first reinforcing member and the second reinforcing member in the front-rear direction.

According to the above-described configuration, the cover member can be deformed such that, with respect to fixing points as fulcrums at which the cover member is fixed to the first and second reinforcing members, a portion of the cover member that is located at a central portion between these fixing points is directed upward. Since the first and second protrusions are disposed between the first and second reinforcing members in the front-rear direction, it is possible to effectively suppress the cover member from being deformed to warp upward.

A power storage device according to the present disclosure may include: an electric device; and a first reinforcing member and a second reinforcing member that are spaced apart from each other in a front-rear direction orthogonal to the upward-downward direction and fixed to a lower surface of the bottom wall portion. The cover member may include: a first fixed portion fixed to the first reinforcing member; and a second fixed portion fixed to the second reinforcing member. The first fixed portion may be located below a front end portion of the electric device, and the second fixed portion may be located below a rear end portion of the electric device or located behind and below the rear end portion.

According to the above-described configuration, the cover member can be deformed such that, with respect to the first and second fixed portions as fulcrums at which the cover member is fixed to the first and second reinforcing members, a portion of the cover member that is located at a central portion between the first and second fixed portions is directed upward. Further, also between the front end portion and the rear end portion of the electric device, the bottom wall portion can be deformed so as to follow the deformation of the cover member.

The foregoing and other objects, features, aspects, and advantages of the present disclosure will become apparent from the following detailed description of the present disclosure when taken in conjunction with the accompanying drawings.

### BRIEF DESCRIPTION OF THE DRAWINGS

Fig. 1 is an exploded perspective view of a power storage device according to an embodiment.
Fig. 2 is a perspective view of a lower case to which a cooler according to the embodiment is fixed, as viewed from the bottom surface side.
Fig. 3 is a schematic cross-sectional view of the power storage device, which is taken along a line III-III shown in Fig. 2.
Fig. 4 is a schematic cross-sectional view taken along a line IV-IV shown in Fig. 3.
Fig. 5 is a plan view showing a positional relation among a bracket for fixing an electric device, the cooler, and a first protrusion in the power storage device according to the embodiment.
Fig. 6 is a cross-sectional view for illustrating a deformation behavior occurring when an upward external force is applied below the electric device in the power storage device according to the embodiment.
Fig. 7 is a schematic cross-sectional view of the power storage device, which is taken along a line VII-VII shown in Fig. 2.
Fig. 8 is an enlarged view of a region surrounded by a line VIII shown in Fig. 7.
Fig. 9 is a cross-sectional view for illustrating a deformation behavior occurring when an upward external force is applied below a power storage module in the power storage device according to the embodiment.

### DESCRIPTION OF THE PREFERRED EMBODIMENTS

Hereinafter, embodiments of the present disclosure will be described in detail with reference to the accompanying drawings. In the embodiments described below, the same or common portions are denoted by the same reference characters in the drawings, and the description thereof will not be repeated.

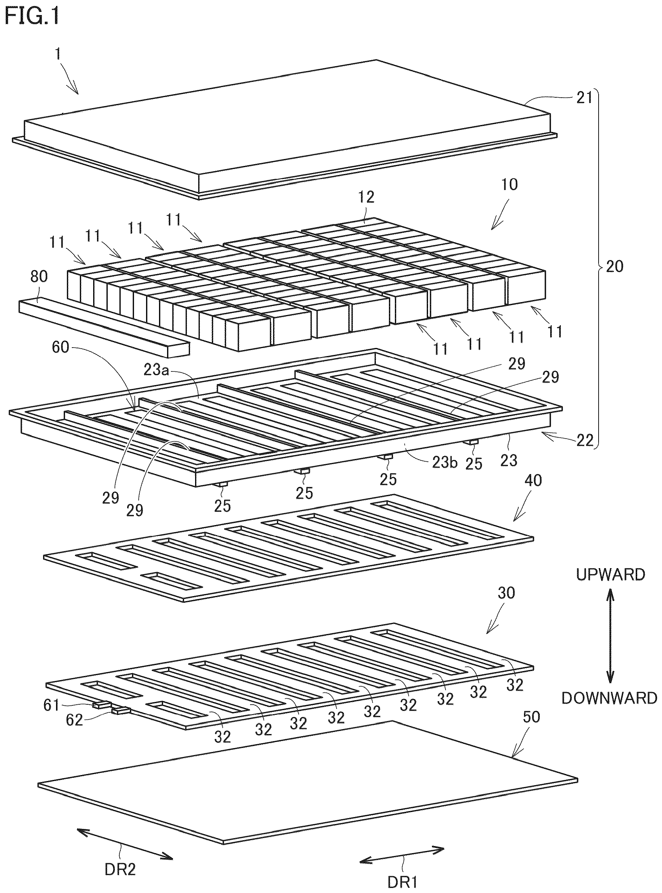

Fig. 1 is an exploded perspective view of a power storage device according to an embodiment. Referring to Fig. 1, a power storage device 1 according to the present embodiment will be hereinafter described.

Power storage device 1 is mounted in a vehicle such as a hybrid electric vehicle, a plug-in hybrid electric vehicle, or a battery electric vehicle. Power storage device 1 is mounted, for example, below a floor panel provided in a vehicle. A ceiling portion of an upper member 21 (described later) of power storage device 1 may function as a floor panel.

As shown in Fig. 1, power storage device 1 includes a power storage unit 10, an accommodation case 20, a plurality of reinforcing members 25, a plurality of cross members 29, a cooler 30, a heat conduction member 40, a cover member 50, an inner heat conduction layer 60, and an electric device 80.

Power storage unit 10 includes a plurality of power storage modules 11. The plurality of power storage modules 11 are arranged in a first direction (a DR1 direction) orthogonal to an upward-downward direction. The first direction is, for example, parallel to a front-rear direction of a vehicle in the state in which power storage device 1 is mounted in the vehicle.

Each of the plurality of power storage modules 11 includes a plurality of power storage cells 12 arranged in a second direction (a DR2 direction) orthogonal to the upward-downward direction and the first direction. The second direction is parallel to a width direction of the vehicle in the above-mentioned state in which power storage device 1 is mounted in the vehicle.

Power storage cell 12 is, for example, a secondary battery such as a nickel-metal hydride battery or a lithium ion battery. Power storage cell 12 has, for example, a rectangular shape. Power storage cell 12 may be made of a liquid electrolyte or a solid electrolyte. Further, power storage cell 12 may be a unit capacitor configured to be able to store electric power.

Accommodation case 20 accommodates power storage unit 10 and electric device 80. Accommodation case 20 includes upper member 21 and a lower case 22.

Upper member 21 has a substantially box shape opened downward. Upper member 21 may be made of a metal material. In order to achieve weight reduction, upper member 21 may be made of a resin material. When the peripheral wall portion of lower case 22 is higher than power storage unit 10, upper member 21 may have a plate shape.

Lower case 22 has a substantially box shape opened upward. Lower case 22 is made of a metal material. Lower case 22 preferably has excellent thermal conductivity.

Lower case 22 has a bottom wall portion 23. The plurality of power storage modules 11 are disposed on bottom wall portion 23 with inner heat conduction layer 60 being interposed therebetween. Bottom wall portion 23 has an inner surface 23a and an outer surface 23b arranged in the upward-downward direction. Inner surface 23a faces upward and faces the plurality of power storage modules 11. Outer surface 23b faces downward and faces the side opposite to the side on which the plurality of power storage modules 11 are located.

The plurality of cross members 29 are disposed inside lower case 22 at a distance from each other in the first direction (a front-rear direction). The plurality of cross members 29 are disposed on the inner surface 23a side. The plurality of cross members 29 extend in the second direction. The plurality of cross members 29 define a region in which electric device 80 and power storage modules 11 are disposed. For example, two power storage modules 11 are disposed between two cross members 29 adjacent to each other in the front-rear direction.

Two power storage modules 11 disposed between two cross members 29 adjacent to each other are fixed to cross members 29 or bottom wall portion 23 by fixing members (not shown) disposed on both end sides in the direction in which power storage cells 12 are arranged.

Inner heat conduction layer 60 is disposed between each power storage module 11 and inner surface 23a. Inner heat conduction layer 60 functions also as an adhesive layer to adhesively fix each power storage module 11 to bottom wall portion 23. Each power storage module 11 is in thermal contact with inner surface 23a via inner heat conduction layer 60.

Inner heat conduction layer 60 is formed of a resin member having thermal conductivity. Examples of inner heat conduction layer 60 applicable in this case can be an adhesive containing a silicone resin, an acrylic resin, a urethane resin, an epoxy resin, or the like.

Cooler 30 serves as a device for cooling the plurality of power storage modules 11. A refrigerant flow path through which refrigerant flows is provided inside cooler 30. The refrigerant flow path is connected to a refrigerant introduction portion 61 and a refrigerant discharge portion 62. The refrigerant having been introduced into the refrigerant flow path through refrigerant introduction portion 61 cools the plurality of power storage modules 11 and is then discharged through refrigerant discharge portion 62.

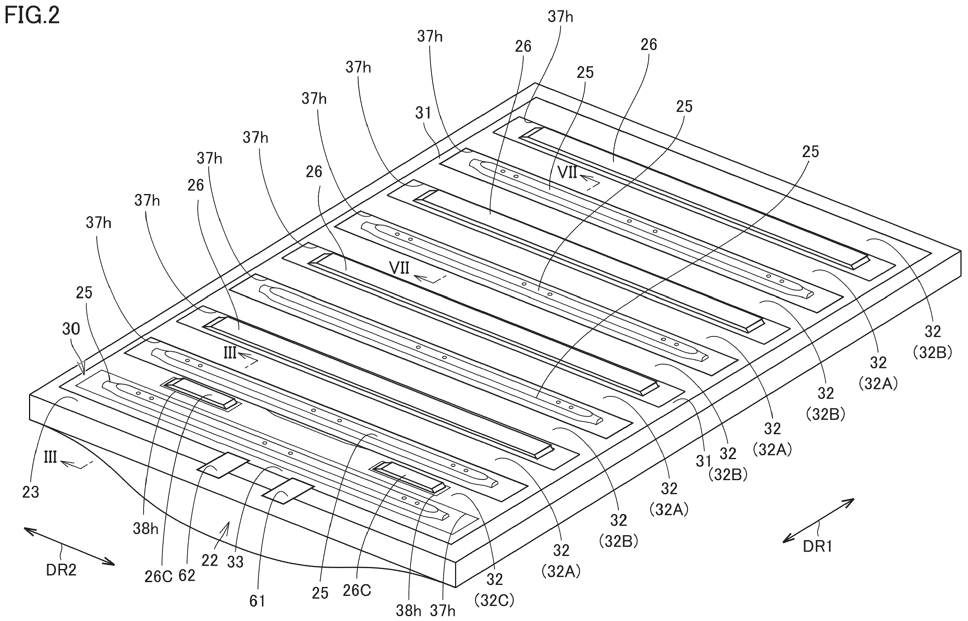

Cooler 30 is disposed below bottom wall portion 23 of lower case 22. Cooler 30 is made of a metal material such as aluminum. The detailed structure of cooler 30 will be described later with reference to Fig. 2.

Heat conduction member 40 is disposed between outer surface 23b of bottom wall portion 23 and cooler 30. The plurality of power storage modules 11 are cooled by cooler 30 via heat conduction member 40, bottom wall portion 23, and inner heat conduction layer 60. Heat conduction member 40 functions also as an adhesive layer that adheres bottom wall portion 23 and cooler 30 to each other. Examples of heat conduction member 40 applicable in this case can be an adhesive containing a silicone resin, an acrylic resin, a urethane resin, an epoxy resin, or the like.

The plurality of reinforcing members 25 are fixed to outer surface 23b of bottom wall portion 23. The plurality of reinforcing members 25 are arranged in the first direction. The plurality of reinforcing members 25 are disposed so as not to interfere with cooler 30.

Cover member 50 covers bottom wall portion 23 from below in the state in which a gap is formed between cover member 50 and bottom wall portion 23. Specifically, cover member 50 covers, from below, cooler 30 disposed below bottom wall portion 23. Cover member 50 protects cooler 30. Cover member 50 is fixed to the plurality of reinforcing members 25. Cover member 50 is made of a metal material.

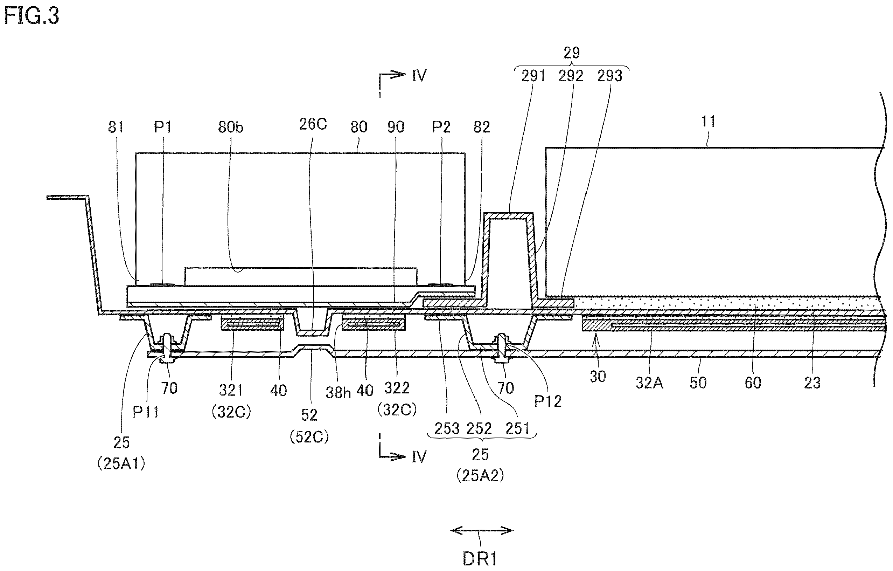

Electric device 80 is arranged side by side with power storage unit 10 in the first direction. Electric device 80 is disposed on one side in the first direction with respect to power storage unit 10. Electric device 80 includes, for example, a junction box. Electric device 80 may also include an electronic control unit. As will be described later, electric device 80 is fixed to bottom wall portion 23 with a bracket 90 (see Fig. 3).

Fig. 2 is a perspective view of the lower case to which the cooler according to the embodiment is fixed, as viewed from the bottom surface side. The detailed structure of cooler 30 and the shape of bottom wall portion 23 will be hereinafter described with reference to Fig. 2.

Cooler 30 includes a pair of holding portions 31, a plurality of cooling portions 32, and a front portion 33. The above-mentioned refrigerant flow path is routed inside the pair of holding portions 31, the plurality of cooling portions 32, and front portion 33.

The pair of holding portions 31 extend in the first direction. The pair of holding portions 31 are disposed apart from each other in the second direction. The pair of holding portions 31 hold the plurality of cooling portions 32.

The plurality of cooling portions 32 are disposed at positions corresponding to the plurality of power storage modules 11 on a one-to-one basis. The number of the plurality of cooling portions 32 provided in this case coincides with the number of the plurality of power storage modules 11. Each of the plurality of cooling portions 32 is provided to connect the pair of holding portions 31 in the second direction. The plurality of cooling portions 32 are arranged side by side at a distance from each other in the first direction.

The plurality of cooling portions 32 include a plurality of cooling portions 32A, a plurality of cooling portions 32B, and a cooling portion 32C. Cooling portion 32C is located on one side in the first direction with respect to the plurality of cooling portions 32A and the plurality of cooling portions 32B. Cooling portion 32C is disposed between front portion 33 and a cooling portion 32A located closest to one side in the first direction among the plurality of cooling portions 32A.

The plurality of cooling portions 32A and the plurality of cooling portions 32B are alternately arranged in the first direction. In the present embodiment, when viewed from above, one pair of cooling portion 32A and cooling portion 32B is disposed between cross members 29 adjacent to each other in the first direction.

In the pair of cooling portions 32A and 32B, cooling portion 32A cools power storage module 11 located on one side in the first direction among two power storage modules 11 located between cross members 29 adjacent to each other in the first direction. Cooling portion 32B cools power storage module 11 located on the other side in the first direction among two power storage modules 11 located between cross members 29 adjacent to each other in the first direction.

Cooler 30 is provided with a plurality of openings 37h. The plurality of openings 37h are provided between two cooling portions 32A and 32B adjacent to each other, between cooling portion 32A located closest to one side in the first direction and cooling portion 32C, and between front portion 33 and cooling portion 32C. Each opening 37h extends in the second direction.

Reinforcing member 25 and a first protrusion 26 are disposed inside each of the plurality of openings 37h. Specifically, reinforcing member 25 is disposed inside each opening 37h among the plurality of openings 37h that is located below a corresponding one of the plurality of cross members 29. First protrusion 26 is disposed inside each opening 37h among the plurality of openings 37h that is located at a position not overlapping with each of the plurality of cross members 29.

Bottom wall portion 23 of lower case 22 has a plurality of first protrusions 26 and 26C protruding downward. First protrusions 26 and 26C are formed by recesses provided in bottom wall portion 23. The protruding amount of each of first protrusions 26 and 26C is smaller than the height of reinforcing member 25 in the upward-downward direction, but each of first protrusions 26 and 26C protrudes more downward than cooling portions 32A, 32B, and 32C.

For example, two holes 38h are provided in cooling portion 32C. Two holes 38h are arranged side by side in the second direction. First protrusion 26C is disposed inside each of two holes 38h.

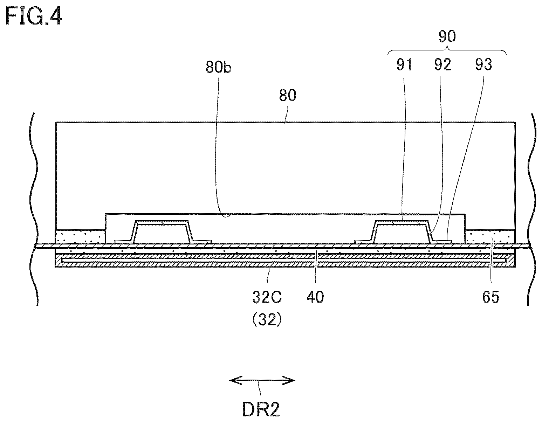

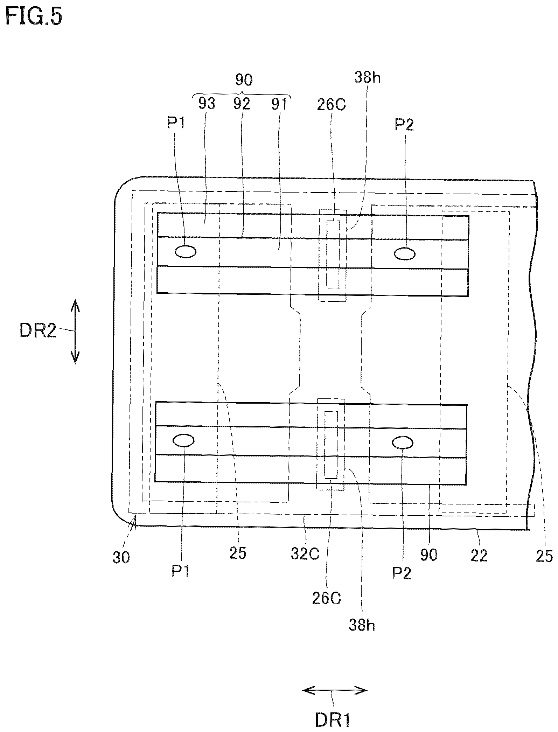

Fig. 3 is a schematic cross-sectional view of the power storage device, which is taken along a line III-III shown in Fig. 1. Note that Fig. 3 does not show upper member 21 for convenience of illustration. Fig. 4 is a schematic cross-sectional view taken along a line IV-IV shown in Fig. 3. Fig. 5 is a plan view showing a positional relation among a bracket for fixing the electric device, the cooler, and the first protrusion in the power storage device according to the embodiment. Referring to Figs. 3 to 5, the configuration around electric device 80 will be hereinafter described.

As shown in Fig. 3, cooling portion 32C is disposed below electric device 80. First protrusion 26C is disposed at a position overlapping with electric device 80 in the upward-downward direction. First protrusion 26C is inserted into hole 38h of cooling portion 32C and protrudes more downward than cooling portion 32C.

Cover member 50 includes a second protrusion 52C that faces first protrusion 26C in the upward-downward direction and protrudes upward. Second protrusion 52C is spaced apart from first protrusion 26C. Cover member 50 is fastened and fixed to the plurality of reinforcing members 25, for example, by a fastening member 70.

The plurality of reinforcing members 25 include a first reinforcing member 25A1 and a second reinforcing member 25A2. First reinforcing member 25A1 and second reinforcing member 25A2 are arranged side by side in the first direction. First reinforcing member 25A1 is located closest to one side in the first direction among the plurality of reinforcing members 25. Second reinforcing member 25A2 is adjacent to first reinforcing member 25A1 in the first direction. First protrusion 26C and second protrusion 52C are disposed between first reinforcing member 25A1 and second reinforcing member 25A2 in the first direction.

Cover member 50 includes a first fixed portion P11 fixed to first reinforcing member 25A1 and a second fixed portion P12 fixed to second reinforcing member 25A2. First fixed portion P11 is located below a front end portion 81 (the end portion located on one side in the first direction) of electric device 80. Second fixed portion P12 is located below a rear end portion 82 (the end portion located on the other side in the first direction) of electric device 80 or located behind and below rear end portion 82.

Front end portion 81 is fixed to a bracket 90 at a first fixing position P1, and rear end portion 82 is fixed to bracket 90 at a second fixing position P2. First fixed portion P11 is located below first fixing position P1. Second fixed portion P12 is located below second fixing position P2 or located behind and below second fixing position P2.

Each reinforcing member 25 has a bottom plate portion 251, a pair of side wall portions 252, and a pair of flange portions 253. Cover member 50 is fastened and fixed to bottom plate portion 251.

The pair of side wall portions 252 are connected to both ends of bottom plate portion 251 in the first direction. The pair of side wall portions 252 are disposed to face each other in the first direction. The pair of side wall portions 252 are inclined to be spaced apart from each other in the first direction toward the upward direction. The pair of side wall portions 252 extend in the second direction.

The pair of flange portions 253 are connected to upper ends of the pair of side wall portions 252. The pair of flange portions 253 are substantially parallel to the first direction.

Cross member 29 includes an upper wall portion 291, a pair of side wall portions 292, and a pair of flange portions 293. The pair of side wall portions 292 are connected to both ends of upper wall portion 291 in the first direction. The pair of side wall portions 292 are disposed to face each other in the first direction. The pair of side wall portions 292 extend in the second direction.

The pair of flange portions 293 are connected to lower ends of the pair of side wall portions 292. The pair of flange portions 293 are substantially parallel to the first direction.

The pair of flange portions 253 and the pair of flange portions 293 are disposed in the upward-downward direction with bottom wall portion 23 being interposed therebetween. The pair of flange portions 253, the pair of flange portions 293, and bottom wall portion 23 are fixed to each other by welding or the like.

As shown in Figs. 3 to 5, electric device 80 is fixed to the inner surface 23a side of bottom wall portion 23 by bracket 90. In the present embodiment, electric device 80 is fixed to bottom wall portion 23 by two brackets 90.

Two brackets 90 are disposed apart from each other in the second direction. Each bracket 90 extends in the first direction. Each bracket 90 has a ceiling portion 91, a pair of side wall portions 92, and a pair of flange portions 93.

The pair of side wall portions 92 are connected to both ends of ceiling portion 91 in the second direction. The pair of side wall portions 92 are disposed to face each other in the second direction. The pair of side wall portions 92 extend in the first direction.

The pair of flange portions 93 are connected to lower ends of the pair of side wall portions 92. The pair of flange portions 93 are substantially parallel to the first direction.

One-side end portion of flange portion 93 among the pair of flange portions 93 that is located on one side in the first direction is fixed by welding or the like to flange portion 253 of reinforcing member 25 located closest to one side in the first direction in the state in which bottom wall portion 23 is sandwiched therebetween.

The other-side end portion of flange portion 93 among the pair of flange portions 93 that is located on the other side in the first direction is fixed by welding or the like to flange portion 293 of cross member 29 located closest to one side in the first direction.

Electric device 80 is fixed to each bracket 90 at first fixing position P1 and second fixing position P2 spaced apart from each other in the first direction. Electric device 80 has a portion spaced apart from bracket 90 between first fixing position P1 and second fixing position P2.

Specifically, electric device 80 has a recess 80b recessed upward, and a gap is formed between recess 80b and ceiling portion 91 of bracket 90. In other words, recess 80b is spaced upward from ceiling portion 91. Recess 80b extends in a planar manner and is formed to extend over two brackets 90 when viewed in the first direction. Recess 80b is located between front end portion 81 and rear end portion 82 of electric device 80.

A heat conduction member 65 is disposed between at least a part of a bottom surface of electric device 80 and inner surface 23a of bottom wall portion 23 of lower case 22. Thereby, electric device 80 and cooler 30 come into thermal contact with each other with bottom wall portion 23 and heat conduction member 65 being interposed therebetween, so that electric device 80 can be cooled.

Both end portions of electric device 80 in the second direction are located outside bracket 90 in the second direction, and heat conduction member 65 is disposed between bottom wall portion 23 and the above-mentioned both end portions. Examples of heat conduction member 65 applicable in this case can be an adhesive containing a silicone resin, an acrylic resin, a urethane resin, an epoxy resin, or the like.

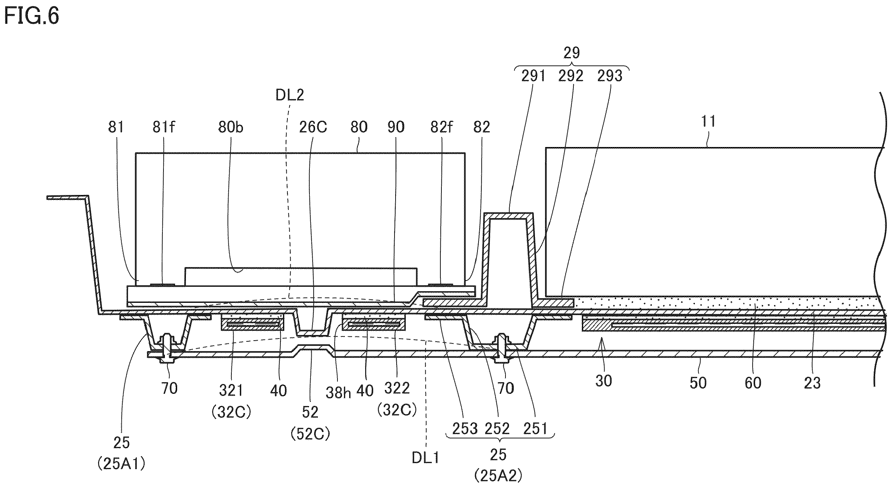

Fig. 6 is a cross-sectional view for illustrating a deformation behavior occurring when an upward external force is applied below the electric device in the power storage device according to the embodiment.

As shown in Fig. 6, when an upward external force is applied to cover member 50 due to road surface interference or the like, second protrusion 52C bumps into first protrusion 26C, and thereby, the deformation of cover member 50 is suppressed. At this time, since first protrusion 26C protrudes more downward than the lower surface of cooler 30, it is possible to suppress cover member 50 from bumping into cooler 30, so that it is possible to suppress an external force from being applied to cooler 30.

Specifically, cover member 50 is fixed to first reinforcing member 25A1 and second reinforcing member 25A2 by first fixed portion P11 and second fixed portion P12. Thus, when an upward external force is applied to cover member 50, cover member 50 is deformed such that an intermediate portion between first fixed portion P11 and second fixed portion P12 in the first direction is warped upward as indicated by a dashed line DL1.

At this time, since first protrusion 26C and second protrusion 52C are located between first fixed portion P11 and second fixed portion P12 in the first direction, it is possible to effectively suppress cover member 50 from being deformed to warp upward as described above.

Further, since first fixed portion P11 is located below front end portion 81 of electric device 80 and second fixed portion P12 is located below rear end portion 82 of electric device 80 or located behind and below rear end portion 82 thereof, the above-described deformation to be warped upward can be induced between first fixed portion P11 and second fixed portion P12, as described above.

In addition, two brackets 90 are disposed in a portion of bottom wall portion 23 that is located above a region extending from first reinforcing member 25A1 to second reinforcing member 25A2. Thus, even when this portion has high rigidity and first protrusion 26C is pressed upward, it is possible to suppress this portion of bottom wall portion 23 from being deformed to warp upward as indicated by a dashed line DL2. Further, even when this portion is deformed to warp, recess 80b of electric device 80 is spaced apart from bracket 90 between first fixing position P1 and second fixing position P2 as described above, and thereby, it is possible to suppress the deformed bottom wall portion 23 from bumping into electric device 80, so that it is possible to suppress an impact from being applied to electric device 80.

In addition, since first protrusion 26C is inserted into hole 38h provided in cooling portion 32C, first protrusion 26C can be efficiently provided.

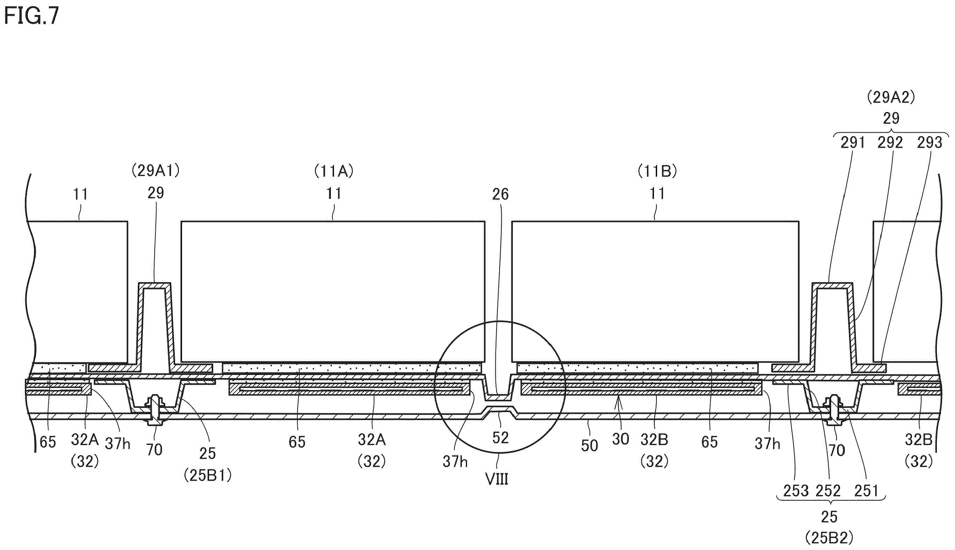

Fig. 7 is a schematic cross-sectional view of the power storage device, which is taken along a line VII-VII shown in Fig. 2. Note that Fig. 7 does not show upper member 21 for convenience of illustration. Referring to Fig. 7, the structure around power storage module 11 will be hereinafter described.

As shown in Fig. 7, the plurality of power storage modules 11 include more than one pair of a first power storage module 11A and a second power storage module 11B on the rear side (the other side in the first direction) of electric device 80. Note that one or more pairs of first and second power storage modules 11A and 11B should only be provided. First power storage module 11A and second power storage module 11B are adjacent to each other in the first direction. First power storage module 11A and second power storage module 11B are spaced apart from each other in the first direction.

First power storage module 11A is disposed on one side in the first direction with respect to second power storage module 11B. Second power storage module 11B is disposed on the other side in the first direction with respect to first power storage module 11A.

The plurality of cross members 29 include a first cross member 29A1 and a second cross member 29A2 that are spaced apart from each other in the first direction. First cross member 29A1 and second cross member 29A2 are disposed on the inner surface 23a side of bottom wall portion 23. First cross member 29A1 and second cross member 29A2 each have the same structure as that of cross member 29 described above. First power storage module 11A and second power storage module 11B are disposed between first cross member 29A1 and second cross member 29A2.

First protrusion 26 is disposed between first power storage module 11A and second power storage module 11B when viewed from above. First protrusion 26 is inserted into opening 37h of cooler 30.

Cover member 50 includes a second protrusion 52 that faces first protrusion 26 in the upward-downward direction and protrudes upward. Second protrusion 52 is spaced apart from first protrusion 26. As will be described later, cover member 50 is fixed to the plurality of reinforcing members 25 including a first bottom reinforcing member 25B1 and a second bottom reinforcing member 25B2.

The plurality of reinforcing members 25 reinforce bottom wall portion 23. First bottom reinforcing member 25B1 and second bottom reinforcing member 25B2 are disposed on outer surface 23b of bottom wall portion 23 and spaced apart from each other in the first direction. First bottom reinforcing member 25B1 and second bottom reinforcing member 25B2 have the same structures as those of first reinforcing member 25A1 and second reinforcing member 25A2.

First cross member 29A1 and first bottom reinforcing member 25B1 are disposed in the upward-downward direction with bottom wall portion 23 being interposed therebetween. In other words, first bottom reinforcing member 25B1 is disposed below first cross member 29A1.

Second cross member 29A2 and second bottom reinforcing member 25B2 are disposed in the upward-downward direction with bottom wall portion 23 being interposed therebetween. In other words, second bottom reinforcing member 25B2 is disposed below second cross member 29A2.

Cooler 30 is disposed between bottom wall portion 23 of lower case 22 and cover member 50. Cooling portion 32A cools first power storage module 11A, and cooling portion 32B cools second power storage module 11B.

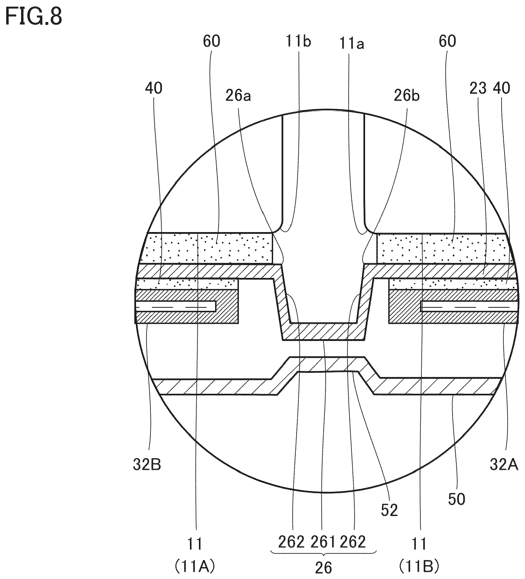

Fig. 8 is an enlarged view of a region surrounded by a line VIII shown in Fig. 7. As shown in Fig. 8, first power storage module 11A has a rear-side corner portion 11b located at a lower portion of a rear portion (an end portion located on the other side in the first direction) of first power storage module 11A. Second power storage module 11B has a front-side corner portion 11a located at a lower portion of a front portion (an end portion located on one side in the first direction) of second power storage module 11B.

First protrusion 26 has a bottom plate portion 261 and a pair of side wall portions 262. The pair of side wall portions 262 are connected to both ends of bottom plate portion 261 in the first direction. The pair of side wall portions 262 are disposed to face each other in the first direction. The pair of side wall portions 262 are inclined to be spaced apart from each other in the first direction toward the upward direction. The pair of side wall portions 262 extend in the second direction.

An upper end portion of each of the pair of side wall portions 262 forms a base portion of first protrusion 26. First protrusion 26 has a front-side base portion 26a (one-side base portion located on one side in the first direction) and a rear-side base portion 26b (the other-side base portion located on the other side in the first direction).

Front-side base portion 26a is located at a position overlapping with rear-side corner portion 11b in the upward-downward direction. Rear-side base portion 26b is located at a position overlapping with front-side corner portion 11a in the upward-downward direction.

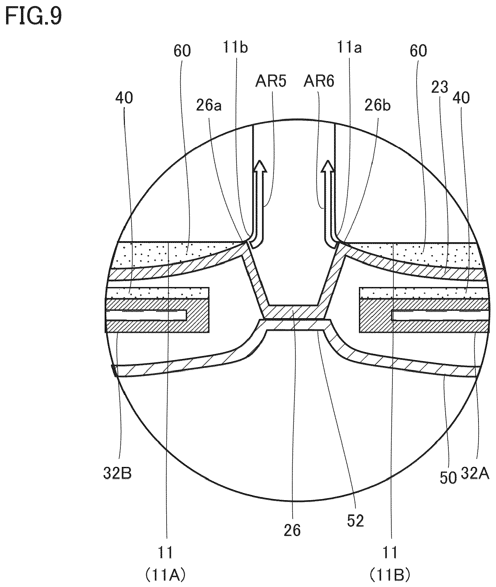

Fig. 9 is a cross-sectional view for illustrating a deformation behavior occurring when an upward external force is applied below the power storage module in the power storage device according to the embodiment.

As shown in Fig. 9, when an upward external force is applied to cover member 50 due to road surface interference or the like, cover member 50 bumps into first protrusion 26, so that deformation of cover member 50 can be suppressed.

First protrusion 26 is pressed upward by cover member 50, but front-side base portion 26a and rear-side base portion 26b each have high rigidity, and thus, bottom wall portion 23 deforms with respect to front-side base portion 26a and rear-side base portion 26b serving as fulcrums. At this time, front-side base portion 26a is located at a position overlapping with rear-side corner portion 11b in the upward-downward direction, and rear-side base portion 26b is located at a position overlapping with front-side corner portion 11a in the upward-downward direction, as described above. Thus, front-side base portion 26a comes into contact with rear-side corner portion 11b of first power storage module 11A, and rear-side base portion 26b comes into contact with front-side corner portion 11a of second power storage module 11B.

In this case, the load transmitted to rear-side corner portion 11b of first power storage module 11A is transmitted to a vertical wall surface (more specifically, a rear surface) of first power storage module 11A as indicated by an arrow AR5. The load transmitted to front-side corner portion 11a of second power storage module 11B is transmitted to a vertical wall surface (more specifically, a front surface) of second power storage module 11B as indicated by an arrow AR6. Thereby, significant deformations of the bottom surfaces of first and second power storage modules 11A and 11B can be suppressed. Further, since the vertical wall surfaces each have high strength and thus can cushion a high load.

Since cover member 50 is provided with second protrusion 52 protruding toward first protrusion 26, cover member 50 readily bumps into first protrusion 26. Thereby, the deformation behavior as described above can be effectively induced.

Further, since first protrusion 26 protrudes more downward than cooler 30, it is possible to suppress cover member 50 from bumping into cooler 30. Thereby, damage to cooler 30 can be suppressed.

In addition, first cross member 29A1 and first bottom reinforcing member 25B1 are disposed in the upward-downward direction with bottom wall portion 23 being interposed therebetween, and second cross member 29A2 and second bottom reinforcing member 25B2 are disposed in the upward-downward direction with bottom wall portion 23 being interposed therebetween, so that the rigidity of lower case 22 can be enhanced. Further, since cover member 50 is fixed to first bottom reinforcing member 25B1 and second bottom reinforcing member 25B2, cover member 50 can be deformed so as to warp upward between first bottom reinforcing member 25B1 and second bottom reinforcing member 25B2 with respect to first bottom reinforcing member 25B1 and second bottom reinforcing member 25B2 serving as fulcrums. At this time, since first protrusion 26 and second protrusion 52 are located between first bottom reinforcing member 25B1 and second bottom reinforcing member 25B2 in the first direction, it is possible to effectively suppress cover member 50 from being deformed to warp upward as described above.

Further, first cross member 29A1 and second cross member 29A2 each have a convex shape protruding upward, and first protrusion 26 located between first cross member 29A1 and second cross member 29A2 has a convex shape protruding downward. Thus, by utilizing the cross-sectional secondary moments of first cross member 29A1, second cross member 29A2, and first protrusion 26, it is possible to suppress any deformation caused by reaction forces of: inner heat conduction layer 60 located between first cross member 29A1 and first protrusion 26 in the first direction; and inner heat conduction layer 60 located between second cross member 29A2 and first protrusion 26 in the first direction.

In the example as described above, front-side base portion 26a overlaps with rear-side corner portion 11b of first power storage module 11A in the upward-downward direction, and rear-side base portion 26b overlaps with front-side corner portion 11a of second power storage module 11B in the upward-downward direction, but the present disclosure is not limited thereto.

Even when first protrusion 26 is pressed upward and front-side base portion 26a and rear-side base portion 26b bump into the lower surface of the power storage module, front-side base portion 26a and rear-side base portion 26b may be located at positions displaced in the first direction from rear-side corner portion 11b of first power storage module 11A and front-side corner portion 11a of second power storage module 11B, respectively, as long as the lower surface of the power storage module is not damaged and the force transmitted to the vertical wall surface of the power storage module is larger than the force transmitted to the lower surface of the power storage module.

Although the embodiments of the present disclosure have been described, it should be understood that the embodiments disclosed herein are illustrative and not restrictive in every respect. The scope of the present disclosure is defined by the terms of the claims, and is intended to include any modifications within the scope and meaning equivalent to the terms of the claims.

## Claims

1. A power storage device (1) comprising:
a lower case (22) having a bottom wall portion (23);
a cooler (30) disposed below the bottom wall portion (23); and
a cover member (50) to cover the cooler (30) from below, wherein
the bottom wall portion (23) includes a first protrusion (26C) protruding downward,
the cover member (50) includes a second protrusion (52C) that faces the first protrusion (26C) in an upward-downward direction and protrudes upward, and
the first protrusion (26C) protrudes more downward than a lower surface of the cooler (30).

2. The power storage device (1) according to claim 1, wherein
the cooler (30) has a hole (38h) penetrating therethrough in the upward-downward direction, and
the first protrusion (26C) is disposed inside the hole (38h).

3. The power storage device (1) according to claim 1, further comprising:
an electric device (80); and
a bracket (90) to fix the electric device (80) to the bottom wall portion (23), wherein
the electric device (80) is fixed to the bracket (90) at a first fixing position (P1) and a second fixing position (P2) that are spaced apart from each other in a front-rear direction orthogonal to the upward-downward direction, and
the electric device (80) has a portion spaced apart from the bracket (90) between the first fixing position (P1) and the second fixing position (P2).

4. The power storage device (1) according to claim 3, wherein a heat conduction member (65) is disposed between at least a part of a bottom surface of the electric device (80) and the bottom wall portion (23).

5. The power storage device (1) according to any one of claims 1 to 4, further comprising a first reinforcing member (25A1) and a second reinforcing member (25A2) that are spaced apart from each other in a front-rear direction orthogonal to the upward-downward direction and fixed to a lower surface of the bottom wall portion (23), wherein
the cover member (50) is fixed to the first reinforcing member (25A1) and the second reinforcing member (25A2), and
the first protrusion (26C) and the second protrusion (52C) are disposed between the first reinforcing member (25A1) and the second reinforcing member (25A2) in the front-rear direction.

6. The power storage device (1) according to any one of claims 1 to 4, further comprising:
an electric device (80); and
a first reinforcing member (25A1) and a second reinforcing member (25A2) that are spaced apart from each other in a front-rear direction orthogonal to the upward-downward direction and fixed to a lower surface of the bottom wall portion (23), wherein
the cover member (50) includes
a first fixed portion (P11) fixed to the first reinforcing member (25A1), and
a second fixed portion (P12) fixed to the second reinforcing member (25A2),
the first fixed portion (P11) is located below a front end portion (81) of the electric device (80), and
the second fixed portion (P12) is located below a rear end portion (82) of the electric device (80) or located behind and below the rear end portion (82).
